# EUROPEAN PATENT SPECIFICATION

(11) **EP 1 455 264 B1**
(45) Date of publication and mention of the grant of the patent: **11.05.2011**
(21) Application number: 04100753.5
(22) Date of filing: 26.02.2004
(51) Int. Cl.: G06F 3/033, G02F 1/133

(54) **Display and Sensor Apparatus**
Bildwiedergabe und Sensorgerät
Dipositif d'affichage et de détection

(30) Priority: 28.02.2003 GB 0304587
(43) Date of publication of application: 08.09.2004
(73) Proprietor: Sharp Kabushiki Kaisha, Osaka-shi, Osaka 545-8522 (JP)
(72) Inventor: Brown, Christopher James, OX1 1SN, Oxford (GB)
(74) Representative: Robinson, John Stuart

(56) References cited:
- EP-A- 0 915 367
- EP-A1- 0 416 176
- EP-A2- 0 587 236
- US-A- 4 345 248
- US-A- 5 677 744
- US-A- 5 835 076
- T TANAKA , KOBAYASHI S.: "Entry of Data and Command for an LCD by Direct Touch: An Integrated LCD Panel" SID INTERNATIONAL SYMPOSIUM DIGEST OF TECHNICAL PAPERS, 1986, pages 318-320, XP009063652

## Description

The present invention relates to an active matrix display and sensor apparatus.

Active matrix liquid crystal displays (AMLCDs) may be used in products which require an input function. For example, mobile telephones and personal digital assistants (PDAs) may display information to a user on an AMLCD and require input from the user, for example from a telephone keypad. Alternatively or additionally, AMLCDs may be required to adjust automatically to environmental conditions, such as ambient light or temperature. In such cases, a sensor is required to accept an input from outside the apparatus. In known arrangements, such sensor functionality has been provided by adding extra components to the display. For example, in order to provide a touch input to form a "touch screen", extra layers have to be added to the front of the display. Providing such functionality therefore adds to the complexity and cost of such apparatuses.

T Tanaka et al, "Entry of Data and Command for an LCD by Direct Touch: An Integrated LCD Panel", SID 1986 discloses an arrangement which provides a touch sensor function in a passive matrix display. In this arrangement, any capacitance change of a liquid crystal layer caused by a touch input is detected using the passive matrix scan and data lines. However, performance is limited and complexity and cost are increased by having to provide suitable display driver and sensor circuits off the panel forming the display.

US 6 028 581 discloses an active matrix liquid crystal display having an integrated sensor arrangement. In this arrangement, photodiodes are integrated at each pixel (picture element) and are arranged to detect touch input, for example by a stylus, or to detect an image formed on the display. However, such an arrangement requires changes to the active matrix which substantially reduce the fill-factor and hence the image quality of the display.

US4345248, US5677744 and EP0915367 also disclose active matrix displays having sensor capabilities provided by elements additional to the display elements.

JP 5-250093 discloses an active matrix liquid crystal display having an arrangement for detecting the coordinates of an input pen when in contact with the display. The input pen generates a fixed voltage, altering the data on the signal electrode lines with which it is contact. The differences between the altered signal and the input data are used to determine the point of contact. The signals induced by the input pen are registered in the addressing matrix and this does not require the presence of a liquid crystal layer.

According to the invention, there is provided an active matrix display and sensor apparatus, comprising: an array of display picture elements arranged as rows and columns, each picture element having a display data input for receiving image data to be displayed, a scan input for enabling input of image data from the data input and an image generating element comprising an optically variable region for displaying the image data, the data inputs of the picture elements of each column being connected to a respective column data line and the scan inputs of the picture elements of each row being connected to a respective row scan line; a data signal generator for supplying data signals to the column data lines; a scan signal generator for supplying scan signals to the row scan lines; and an output arrangement connected to the column data lines for outputting sensor signals, characterised in that output arrangement is arranged to generate the sensor signals from charge transfers produced by capacitance changes within the optically variable regions of the display picture elements in response to external stimuli.

The apparatus may comprise a display substrate on which are integrated the data signal generator, the scan signal generator, the output arrangement, and electronic components of the array. The data signal generator may be disposed along a first edge of the array and the output arrangement may be disposed along a second edge of the array opposite the first edge.

Each picture element may comprise the image generating element and an electronic switch. Each image generating element may comprise a liquid crystal element. Each picture element may comprise a storage
capacitor. Each electronic switch may comprise a thin film transistor. Each transistor may have a gate connected to the picture element scan input, a source connected to the picture element data input, and a drain connected to the image generating element.

The apparatus may comprise a controller for controlling at least one of the data and scan signal generators and the output arrangement. The controller may be integrated on the display substrate. The apparatus may comprise active devices embodied as thin film transistors.

The controller may be arranged to control which of the picture element sensor signals are output by the output arrangement. The controller may be programmable to determine which of the picture element sensor signals are output by the output arrangement. The controller may be reprogrammable during operation of the apparatus to change which of the picture element sensor signals are output by the arrangement. The controller may be arranged to control operation of the data and scan signal generators and the output arrangement to define alternate image writing phases and sensor reading phases. A frame of image data may be written to the array during each writing phase. Each reading phase may occur during a vertical blanking period between consecutive writing phases.

At least one row of image data may be written to the array during each writing phase. Each reading phase may comprise outputting the sensor signals from at least one row of picture elements after the at least one row to which image data were written during the preceding writing phase.

Sensor signals of all of the picture elements may be output during each reading phase.

The sensor signals of a proper subset of all of the picture elements may be output during each reading phase, where the term "proper subset" means a subset but excluding the full set and the empty set. The sensor signals of the same proper subset of picture elements may be output during the reading phases. As an alternative, the proper subset of picture elements may comprise different picture elements during each reading phase of a group of reading phases such that the sensor signals of all of the picture elements are output during each group of reading phases.

The proper subset of picture elements may comprise at least one group of rows of picture elements, the or each group containing at least one row. The at least one group may comprise a plurality of groups which are substantially evenly spaced in the column direction of the array. The at least one group may comprise a plurality of adjacent rows.

The controller may be arranged to control operation of the data and scan signal generators and the output arrangement to write image data to and to read sensor signals from the array simultaneously. The data signal generator may be arranged to supply image data to first ones of the data lines and the output arrangement may be arranged to read sensor signals simultaneously from second ones of the data lines different from the first ones of each row of the picture elements. The first and second ones may be the same for all of the rows of the picture elements.

The output arrangement may comprise a plurality of charge transfer amplifiers connected to the column data lines. The number of charge transfer amplifiers may be less than the number of data lines and each charge transfer amplifier may be connectable to any one of a respective set of the data lines by a respective first multiplexer. The output arrangement may comprise a plurality of analog/digital converters connected to outputs of the charge transfer amplifiers. The number of converters may be less than the number of charge transfer amplifiers and each converter may be connectable to any one of a respective set of the charge transfer amplifier outputs by a respective second multiplexer. The output arrangement may comprise a shift register for converting parallel outputs from the converters to a serial output.

It is thus possible to provide ,an apparatus in which sensor functionality is integrated with an active matrix display, such as an active matrix liquid crystal display. By using the active matrix as a means of input, no modification of the active matrix or driver I circuitry is required in order to provide the sensing functionality. There is no need for reduced pixel aperture or reduced fill-factor so that display quality need not be impaired by integration of the sensing functionality. The active matrix and driver arrangements may be of standard design and the additional sensing functionality may be provided by, for example, integrating additional circuitry along a side of the active matrix which would not otherwise have been used.

In those embodiments having a controller which is programmable, it is possible to provide an apparatus in which sensor and/or display operation may be controlled by software, for example in accordance with the requirements of a particular application. Thus, the same apparatus may be used in a variety of operational modes according to application and the software or programming to define the actual mode of operation may easily be provided from an external source, such as processing hardware and software for supplying the image data to the apparatus. It is also possible for such programming to be associated with displayed images and for this to be changed during operation. For example, if a control icon is sent for display, the apparatus may at the same time be arranged to respond to touch in the region of the icon so as to provide a touch display function without requiring any additional hardware or additional layers to be provided.

The invention will be further described, by way of example, with reference to the accompanying drawings, in which:
Figure 1 is a block schematic diagram of an active matrix display and sensor arrangement constituting an embodiment of the invention;
Figure 2 is a timing diagram illustrating a first mode of operation of the apparatus of Figure 1;
Figure 3 is a timing diagram illustrating a second mode of operation of the apparatus of Figure 1;
Figures 4 to 6 are diagrams similar to Figure 1 illustrating further modes of operation of the apparatus of Figure 1;
Figure 7 is a circuit diagram illustrating a sense amplifier and converter of the apparatus of Figure 1;
Figure 8 is a block schematic diagram illustrating a first example of the output arrangement of the apparatus of Figure 1; and
Figure 9 is a block schematic diagram illustrating a second example of the output arrangement of the apparatus of Figure 1.

Like reference numerals refer to like parts throughout the drawings.

The active matrix liquid crystal display and sensor apparatus is formed on a display substrate illustrated diagrammatically at 1 and comprises a timing and control circuit 2 connected to an input 3 for receiving timing and control signals together with image data to be displayed. The circuit 2 supplies the appropriate signals to a data signal generator in the form of a display source driver 4 and a scan signal generator in the form of a gate driver 5. The drivers 4 and 5 may be of any suitable type, such as of a standard or conventional type, and will not be described further.

The display source driver 4 has a plurality of outputs which are connected to but isolatable from a plurality of matrix column electrodes which act as column data lines for the active matrix of picture elements (pixels) indicated at 6. The display source driver outputs may, for example, only be connected to the data lines when the driver is enabled by the control circuit 2. The column electrodes extend throughout the height of the active matrix 6 and each is connected to data inputs of a respective column of pixels. Similarly, the driver 5 has a plurality of outputs connected to row electrodes which extend throughout the width of the matrix 6. Each row electrode acts as a row scan line and is connected to scan inputs of the pixels of the respective row.

One of the pixels is illustrated in more detail at 10 and is of a standard active matrix liquid crystal type. The pixel 10 comprises an electronic switch 11 in the form of a poly-silicon thin film transistor whose source is connected to the column electrode 12, whose gate is connected to the row electrode 13, and whose drain is connected to a liquid crystal pixel image generating element 14 and a parallel storage capacitor 15.

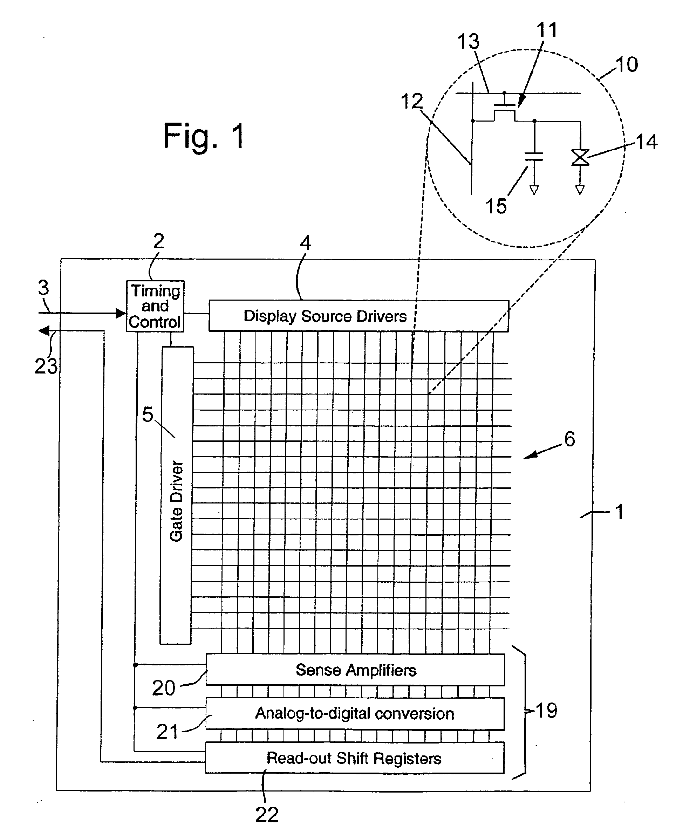

Figure 1 illustrates diagrammatically the physical layout of the various parts of the arrangement. All of the electronics are integrated on the display substrate 1 with the display source driver 4 being disposed along the upper edge of the matrix 6 and the gate driver 5 being disposed along the left edge of the matrix 6. The drivers 4 and 5 and the matrix 6 and their relative dispositions may be standard or conventional.

The arrangement further comprises an output arrangement 19 which is disposed along the bottom edge of the matrix 6. The arrangement 20 comprises a plurality of sense amplifiers 20 which are controlled, for example enabled, by a control signal from the circuit 2 and whose inputs are connected to respective column electrodes. The outputs of the sense amplifiers are supplied to an analogue-to-digital conversion block 21, which converts the analogue values sensed by the sense amplifiers 20 to parallel digital outputs. The outputs of the conversion block 21 are connected to read-out shift registers 22, which convert the parallel output data to serial output data and supply this to a sense output 23 of the arrangement.

The references to rows and columns are not intended to be limited to horizontal rows and vertical columns but, instead, refer to the standard well-known way in which image data are entered row by row. Although pixel rows are normally arranged horizontally and pixel columns vertically in displays, this is not essential and the rows could, for example, equally well be arranged vertically with the columns then being arranged horizontally.

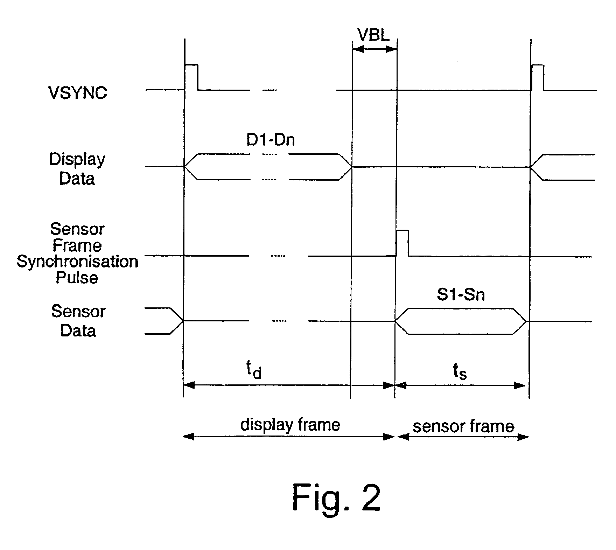

In use, image data for display are supplied by any suitable source to the input 3 of the arrangement and are displayed by the active matrix 6 in accordance with the operation of the drivers 4 and 5. For example, in a typical arrangement where the display is refreshed row-by-row, pixel image data are supplied serially as image frames with a frame synchronisation pulse VSYNC indicating the start of each frame refresh cycle as shown in Figure 2. Rows of pixel image data are entered one after the other in the display source driver 4 and a scan signal is supplied to the appropriate row electrode for enabling the image data to be stored in the appropriate row of pixels. Thus, the pixel rows of the matrix 6 are refreshed a row at a time with the gate driver 5 usually supplying scan signals a row at a time starting at the top row and finishing at the bottom row when a frame refresh cycle has been completed.

In the mode of operation illustrated in Figure 2, each display frame occupies a time t_{d} and includes a refresh part during which the display data are used to refresh the matrix 6 of pixels a row at a time followed by a vertical blanking period VBL. At the end of the display frame period, a sensor frame synchronisation pulse is supplied to initiate a sensor frame of period tₛ forming a sense phase of the apparatus.

During the sense phase, outputs of the display source driver 4 are isolated from the column electrodes and the sense amplifiers 20 are enabled by the circuit 2. The gate driver 5 again scans the row electrodes one at a time in turn from the top of the matrix 6 to the bottom and the signals sensed by the sense amplifiers 20 are converted to digital form by the conversion block 21 and read out a row at a time by the shift registers 22. The shift registers 22 may produce a pure "single bit" serial output or may produce multi-bit serial word outputs.

During the display phase, when the pixel 10 is being refreshed, the gate driver 5 supplies a scan signal to the row electrode 13, which thus turns on the thin film transistor 11. The display source driver 4 supplies a voltage representing the desired visual state of the image generating element simultaneously to the column electrode 12 and charge for determining the desired image appearance is transferred from the column electrode 12 to the storage capacitor 15 and to the image generating liquid crystal element 14, which also acts as a capacitor. The voltage across the element 14 causes this to display the desired image grey level in the known way. The liquid crystal pixel image generating element 14 comprises the optically variable region which gives rise to the display action.

Standard display pixels such as that illustrated at 10 may be used to sense external stimuli without requiring any substantial modification. For example, each display pixel may be used to detect a touch input, as described in T. Tanaka et al, "Entry of Data and Command for an LCD Direct Touch: An Integrated LCD Panel", SID 1986. Pressure applied to the top glass plate of an LCD assembly causes deformation in the liquid crystal around the area to which pressure is applied. This deformation causes a detectable change in capacitance of the liquid crystal element 14. This change in capacitance represents a signal generated by and within the optically variable region of the liquid crystal element 14.

During the sense phase when the row containing the pixel 10 is enabled by the scan signal from the driver 5 on the row electrode 13, the element 14 together with the capacitor 15 are connected to the column electrode 12 by the transistor 11. Any variation of characteristic in the pixel as a result of an external stimulus is thus made accessible to the one of the sense amplifiers 20 connected to the column electrode 12 so that the characteristic resulting from the stimulus is converted to an analogue value by the sense amplifier. The characteristic sensed by the sense amplifiers may be pixel voltage, current, stored charge or capacitance or may be a combination of any of these.

The cycle of operation is then repeated starting with the VSYNC pulse which initiates refreshing of the display with the next frame of display data. The display frame time t_{d} may or may not be equal to the sensor frame time tₛ.

Although Figure 2 illustrates the sensor frame occurring after the vertical blanking period VBL of the preceding display frame, the sensor frame may alternatively occur within the blanking period of the display frame. All of the rows may be scanned for sensor data during the sensor frame. Alternatively, a different proper subset of the rows of pixels may be scanned during each of a plurality of frames such that the entire matrix is scanned for sensor data over the period of the plurality of display frames. For example, the number of rows scanned for sensor data may be dependent on the display frame rate and the patterns of scanned rows may be determined by software in the timing and control circuit 2. Such an arrangement may be used to provide an improvement in the quality of the displayed image, as compared with scanning the whole matrix during the sensor frame, and may allow the display to maintain as high a frame rate as for conventional displays which do not provide sensing functionality. The term "proper subset" as used herein is defined as being a subset of the full set, excluding the cases of the empty set and the full set.

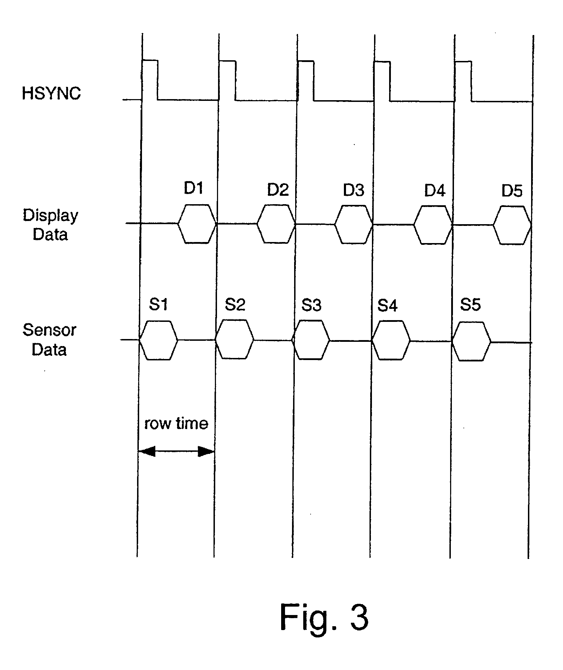

Figure 3 illustrates an alternative mode of operation, in which display and sensing phases are performed during each row refresh period or row time. The start of each row time is defined by a horizontal synchronisation pulse HSYNC. The first or top row of pixels of the matrix 6 is enabled by the first scan pulse of the frame from the gate driver 5 so that the transistors 11 of the pixels 10 of the first row are switched on and the liquid crystal elements 14 of that row are connected, together with the storage capacitors 15, to the respective column electrodes 12. The circuit 2 enables the sense amplifiers 20 while ensuring that the display source driver outputs are disconnected or electrically isolated from the electrodes 12 so as not to interfere with the sensing operation. In embodiments where the display source driver 4 is such that its outputs are isolated from the electrodes 12 when it is inactive, no modification is necessary and the driver 4 may be of standard or known type. Alternatively, if the driver outputs are not isolated by the design of the driver circuit, means for isolating the outputs from the electrodes 12 are provided and are controlled by the circuit 2.

In Figure 3, the sensor data for the first row are indicated at S1. At the end of the sense phase, the output arrangement 19 is prevented by the circuit 2 from responding to the pixel characteristics of the enabled first row of the matrix 6. Display data in the form of the appropriate analogue voltages for the desired pixel optical characteristics are supplied by the display source driver 4 to the column electrodes 12 and the appropriate charge for each pixel is transferred to the element 14. The scan signal for the first row is then disabled by the gate driver 5 so that the transistors 11 of the pixels 10 are switched off to isolate the elements 14 from the column electrodes 12. This completes refreshing of the first row of the matrix 6.

This cycle of operations is then repeated for each row of the matrix 6 until the whole matrix has been scanned for sensor signals and refreshed with a frame of image data. Because the sensing phase would corrupt or destroy display data stored at each pixel, the sensing phase is performed before the display refreshing phase for each row of the matrix 6.

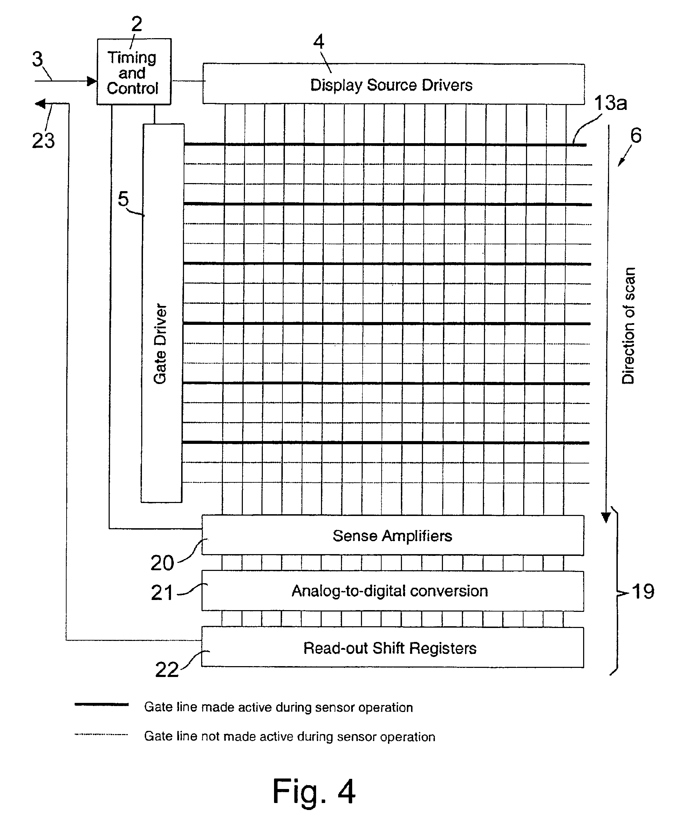

Figure 4 illustrates another mode of operation in which the whole of the matrix 6 is refreshed by each frame of image data but only every Nth row of pixels is used during the sense phase, where N is an integer greater than 1 and has the value 3 in the embodiment illustrated in Figure 4. This mode of operation may be performed using either of the modes illustrated in Figures 2 and 3. By selecting the value of N, the spatial resolution of the sensing function can be selected in accordance with requirements. For many applications, the required sensing resolution is substantially less than the required display resolution. Reducing the number of rows which are scanned during the sense phase reduces the power consumption and the time taken for the matrix 6 to be scanned during the sense phase.

The actual pattern of rows which are scanned during the sense phase may be determined by software in the timing and control circuit 2. For example, the value of N may be set by the source of signals supplied to the input 3 of the apparatus. Alternatively, in applications where uniform resolution of sensing is not required, the pattern of rows for the sense phase may be entered in the circuit 2 and the rows which are sensed may not be evenly spaced across the matrix 6.

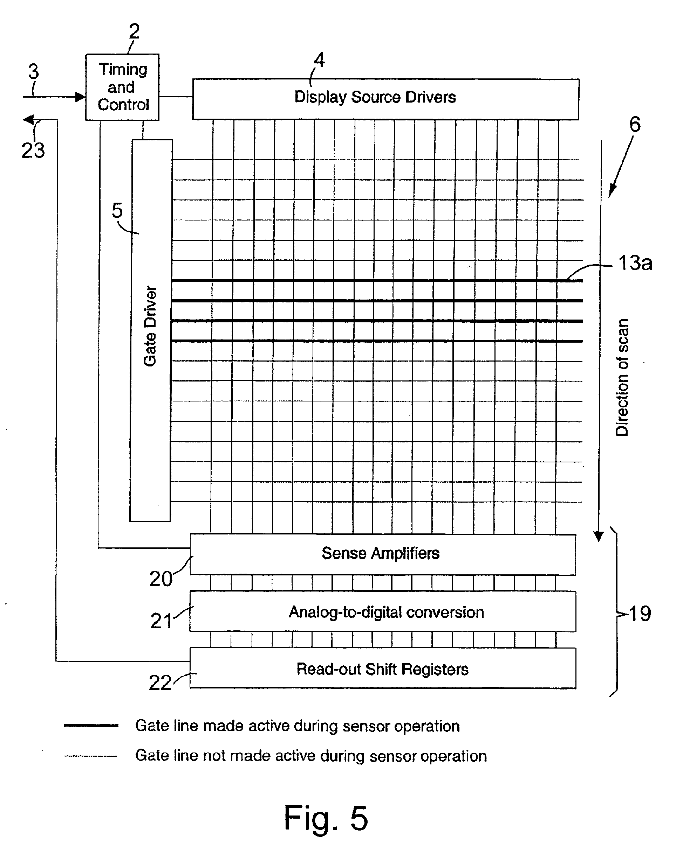

Figure 5 illustrates another mode of operation in which only some of the pixel rows are scanned for sensor signals. A group of, in this case four, consecutive or adjacent rows of pixels are scanned for sensing during each sensor frame. Again, the number of rows which are scanned may be determined by software in the circuit 2. Further, this mode may be combined with the mode illustrated in Figure 4 such that spaced groups of consecutive rows are scanned for sensing.

In Figures 4 and 5, those rows which are scanned during sensor operation are illustrated by bold lines such as 13a.

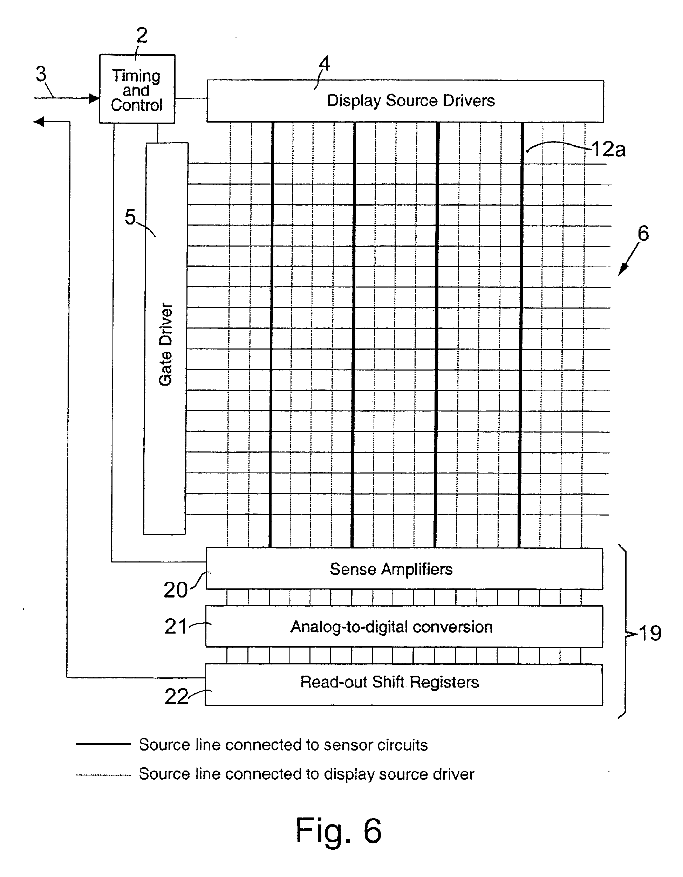

Figure 6 illustrates a further mode of operation in which only some of the columns of pixels are scanned during sensor operations. Again, those columns which are scanned are illustrated by bold lines such as 12a. In this mode, display and sensing operations are carried out simultaneously but with each column of pixels performing sensing or display but not both. Those columns of pixels being used for display are connected by the column electrodes to the display source drivers 4 whereas those columns of pixels being used for sensing are isolated from the outputs of the drivers 4 and are connected to the sense amplifiers 20. In particular, each column of pixels should not be connected simultaneously to a display driver output and a sense amplifier because the display function interferes with the sensing function and vice versa.

Again, the pattern of columns for sensing may be determined by software programmed in the circuit 2. The pattern of source lines connected to the drivers 4 or the sense amplifiers 20 may change from row to row and/or from frame to frame. Programming of the circuit to control these patterns may be changed from time to time by reprogramming so as to change the patterns and this may even be done from row to row or from frame to frame so as to achieve the desired patterns of sensing and display pixels.

The modes of operation described hereandbefore are not necessarily mutually exclusive and may be combined. Thus, any desired display or sensing pattern may be achieved without having to scan pixels unnecessarily.

These techniques may be used so as to relate the area of the matrix 6 to be scanned for sensor data to the displayed image. For example, an icon may be displayed and only the area where the icon is displayed may be scanned for sensor data.

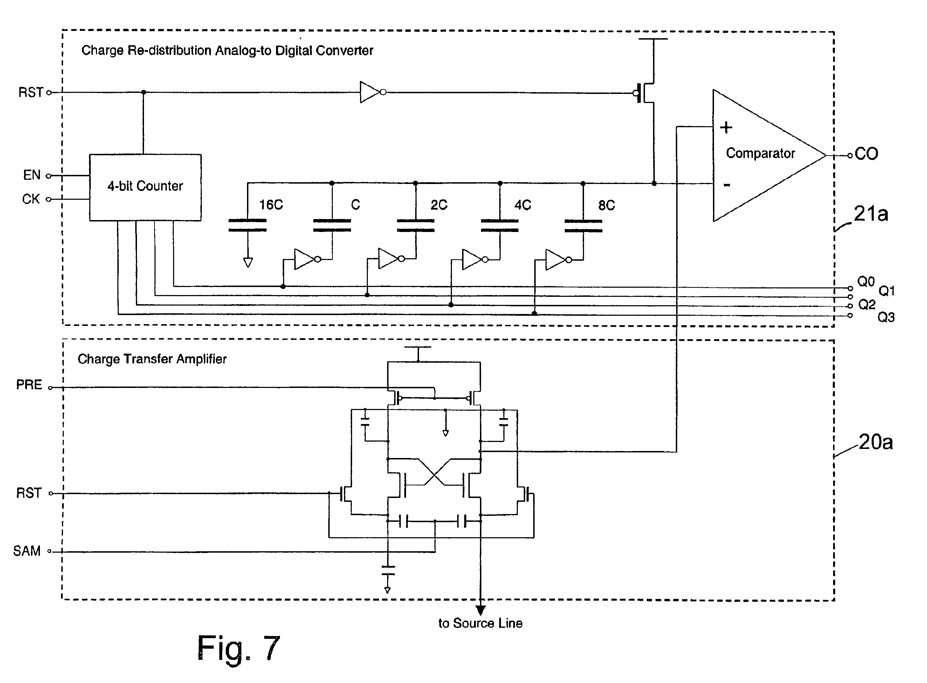

The sense amplifiers 20 and the analogue-to-digital conversion 21 may be embodied by any suitable arrangements and examples of these are illustrated in Figure 7. In this example, each sense amplifier is embodied by a charge transfer amplifier 20a as disclosed in H.Morimura et al, "A Novel Sensor Cell Architecture and Sensing Circuits Scheme for Capacitive Fingerprint Sensors", IEEE Journal of Solid-State Circuits, vol. 35, no. 5, May 2000. Each converter may be embodied as a charge re-distribution analogue-to-digital converter as shown at 21a and as disclosed in D.Johns and K.Martin, "Analogue Integrated Circuit Design", Wiley, 1997.

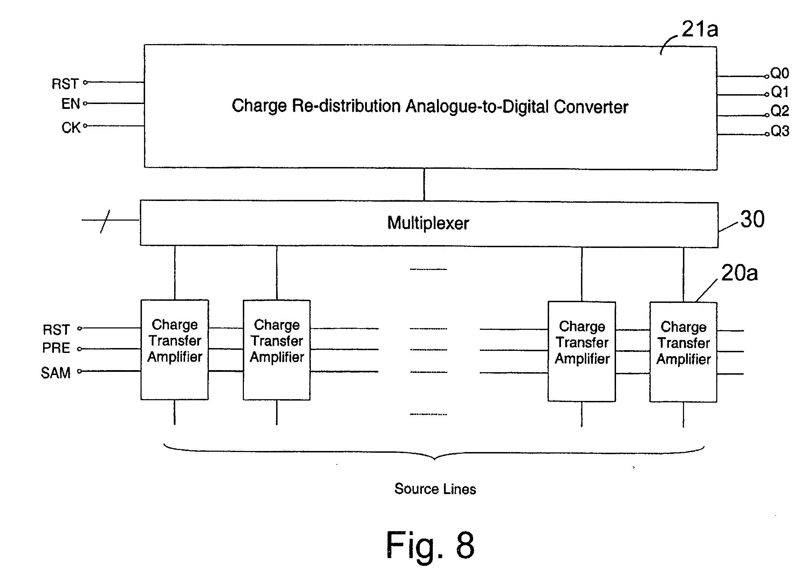

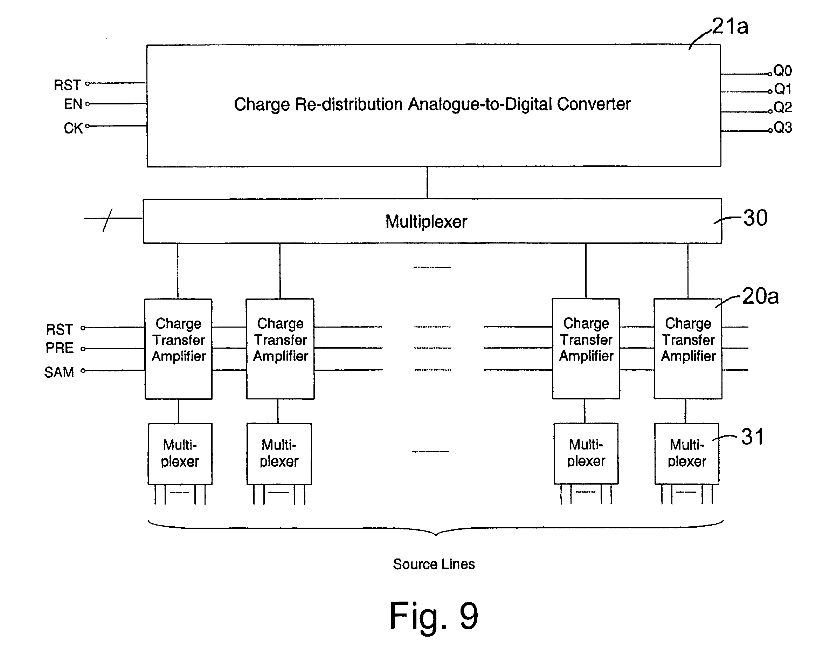

Figure 8 illustrates an arrangement in which the number of analogue-to-digital converters 21a is less than the number of charge transfer amplifiers 20a. In this case, each converter 21a is connected via a multiplexer 30 to the outputs of several charge transfer amplifiers 20a. The multiplexer 30 is controlled so as to connect one amplifier 20a at a time to the input of the converter 21a. Figure 9 shows a modification to this arrangement in which the number of charge transfer amplifiers 20a is less than the number of column electrodes 12. Each charge transfer amplifier 20a is connected by a further multiplexer 31 to its set of column electrodes 12 with the multiplexers 31 being arranged to connect the column electrodes one at a time to the input of the corresponding amplifier 20a. Such arrangements reduce the substrate area required for the output arrangement and may be used to avoid having to reduce display resolution or increase the display size.

The output arrangement 19 may be formed on the substrate 1 using any of the techniques which are known for forming the drivers 4 and 5 and the active matrix 6 on the display substrate. For example, the active devices of the whole apparatus may be formed as poly-silicon thin film transistors. It is therefore possible to add the output arrangement 19 without requiring any or any substantial number of additional steps during the manufacturing process.

It is thus possible to provide an apparatus which adds integrated sensor functionality to a standard substantially unmodified type of active matrix liquid crystal display. The drivers 4 and 5 and the active matrix 6 may be of standard or known type and do not require any, or any substantial, modification in order to provide the sensor functionality. Thus, the appearance of the display need not be affected by the sensor functionality, which is effectively provided by the addition of the output arrangement 19 on a part of the substrate 1 which would not otherwise have been used. By controlling the timing and sequence of the scan pulses, the arrangement may be operated in different ways, for example to provide different modes of display and sense phases. Also, the resolution and frequency of sensing can be set by control signals supplied to the circuit 2.

## Claims

1. An active matrix display and sensor apparatus comprising: an array (6) of display picture elements (10) arranged as rows and columns, each picture element having a display data input (12) for receiving image data to be displayed, a scan input (13) for enabling input of image data from the data input and an image generating element (14) comprising an optically variable region for displaying the image data, the data inputs of the picture elements of each column being connected to a respective column data line and the scan inputs of the picture elements of each row being connected to a respective row scan line; a data signal generator (4) for supplying data signals to the column data lines; a scan signal generator (5) for supplying scan signals to the row scan lines; and an output arrangement (19) connected to the column data lines for outputting sensor signals, **characterised in that** the output arrangement (19) is arranged to generate the sensor signals from charge transfers produced by capacitance changes within the optically variable regions of the display picture elements in response to external stimuli.

2. An apparatus as claimed in claim 1, **characterised by** comprising a display substrate (1) on which are integrated the data signal generator (4), the scan signal generator (5), the output arrangement (19), and electronic components of the array.

3. An apparatus as claimed in claim 2, further **characterised in that** the data signal generator (4) is disposed along a first edge of the array and the output arrangement (19) is disposed along a second edge of the array opposite the first edge.

4. An apparatus as claimed in any one of the preceding claims, **characterised in that** each picture element (10) comprises the image generating element (14) and an electronic switch (11).

5. An apparatus as claimed in claim 4, **characterised in that** each image generating element (14) comprises a liquid crystal element (14).

6. An apparatus as claimed in claim 4 or 5, **characterised in that** each picture element (10) comprises a storage capacitor (15).

7. An apparatus as claimed in any one of claims 4 to 6, **characterised in that** each electronic switch (11) comprises a thin film transistor.

8. An apparatus as claimed in claim 7, **characterised in that** each transistor has a gate connected to the picture element scan input (13), a source connected to the picture element data input (12), and a drain connected to the image generating element (14).

9. An apparatus as claimed in any one of the preceding claims, **characterised by** comprising a controller (2) for controlling at least one of the data and scan signal generators and the output arrangement (19).

10. An apparatus as claimed in claim 9 when dependent on claim 2 or 3, **characterised in that** the controller (2) is integrated on the display substrate (1).

11. An apparatus as claimed in claim 10, **characterised by** comprising active devices embodied as thin film transistors.

12. An apparatus as claimed in any one of claims 9 to 11, **characterised in that** the controller (2) is arranged to control which of the picture element sensor signals are output by the output arrangement (19).

13. An apparatus as claimed in claim 12, **characterised in that** the controller (2) is programmable to determine which of the picture element sensor signals are output by the output arrangement (19).

14. An apparatus as claimed in claim 13, **characterised in that** the controller (2) is reprogrammable during operation of the apparatus to change which of the picture element sensor signals are output by the output arrangement (19).

15. An apparatus as claimed in any one of claims 9 to 14, **characterised in that** the controller (2) is arranged to control operation of the data and scan signal generators and the output arrangement (19) to define alternating image writing phases and sensor reading phases.

16. An apparatus as claimed in claim 15, **characterised in that** a frame of image data is written to the array during each writing phase.

17. An apparatus as claimed in claim 15 or 16, **characterised in that** each reading phase occurs during a vertical blanking period between consecutive writing phases.

18. An apparatus as claimed in claim 15, **characterised in that** at least one row of image data is written to the array during each writing phase.

19. An apparatus as claimed in claim 18, **characterised in that** each reading phase comprises outputting the sensor signals from at least one row of picture elements after the at least one row to which image data were written during the preceding writing phase.

20. An apparatus as claimed in any one of claims 15 to 19, **characterised in that** sensor signals of all of the picture elements (10) are output during each reading phase.

21. An apparatus as claimed in any one of the claims 15 to 19, **characterised in that** the sensor signals of a proper subset of all of the picture elements are output during each reading phase, where the term "proper subset" means a subset but excluding the full set and the empty set.

22. An apparatus as claimed in claim 21, **characterised in that** the sensor signals of the same proper subset of picture elements are output during the reading phases.

23. An apparatus as claimed in claim 21, **characterised in that** the proper subset of picture elements comprises different picture elements during each reading phase of a group of reading phases such that the sensor signals of all of the picture elements are output during each group of reading phases.

24. An apparatus as claimed in any one of claim 21 to 23, **characterised in that** the proper subset of picture elements comprises at least one group of rows of picture elements, the or each group containing at least one row.

25. An apparatus as claimed in claim 24, **characterised in that** the at least one group comprises a plurality of groups which are substantially evenly spaced in the column direction of the array.

26. An apparatus as claimed in claim 24 or 25, **characterised in that** the at least one group comprises a plurality of adjacent rows.

27. An apparatus as claimed in any one of claims 12 to 14, **characterised in that** the controller (2) is arranged to control operation of the data and scan signal generators and the output arrangement (19) to write image data to and to read sensor signals from the array simultaneously.

28. An apparatus as claimed in claim 27, **characterised in that** the data signal generator (4) is arranged to supply image data to first ones of the data lines and the output arrangement (19) is arranged to read sensor signals simultaneously from second ones of the data lines different from the first ones for each row of the picture elements.

29. An apparatus as claimed in claim 28, **characterised in that** the first and second ones are the same for all of the rows of the picture elements.

30. An apparatus as claimed in any one of the preceding claims, **characterised in that** the output arrangement (19) comprises a plurality of charge transfer amplifiers (20, 20a) connected to the column data lines.

31. An apparatus as claimed in claim 30, **characterised in that** the number of charge transfer amplifiers (20, 20a) is less than the number of data lines and each charge transfer amplifier is connectable to any one of a respective set of the data lines by a respective first multiplexer (31).

32. An apparatus as claimed in claim 30 or 31 **characterised in that** the output arrangement (19) comprises a plurality of analog/digital converters (21, 21a) connected to outputs of the charge transfer amplifiers (20, 20a).

33. An apparatus as claimed in claim 32, **characterised in that** the number of converters (21, 21a) is less than the number of charge transfer amplifiers (20, 20a) and each converter is connectable to any one of a respective set of the charge transfer amplifier outputs by a respective second multiplexer (30).

34. An apparatus as claimed in claim 32 or 33, **characterised in that** the output arrangement (19) comprises a shift register (22) for converting parallel outputs from the converters to a serial output.

## Patentansprüche

1. Anzeige- und Sensorvorrichtung mit aktiver Matrix, die enthält: eine Anordnung (6) von Anzeigebildelementen (10), die als Zeilen und Spalten angeordnet sind, wobei jedes Bildelemente einen Anzeigedateneingang (12) zum Empfangen der anzuzeigenden Bilddaten, einen Abtasteingang (13) zum Freigeben der Eingabe der Bilddaten von dem Dateneingang und ein Bilderzeugungselement (14), das einen optisch variablen Bereich zum Anzeigen der Bilddaten enthält, besitzt, wobei die Dateneingänge der Bildelemente jeder Spalte mit einer jeweiligen Spaltendatenleitung verbunden sind und die Abtasteingänge der Bildelemente jeder Zeile mit einer jeweiligen Zeilenabtastleitung verbunden sind; einen Datensignalgenerator (4) zum Liefern der Datensignale an die Spaltendatenleitungen; einen Abtastsignalgenerator (5) zum Liefern der Abtastsignale an die Zeilenabtastleitungen; und eine Ausgangsanordnung (19), die mit den Spaltendatenleitungen verbunden ist, zum Ausgeben der Sensorsignale, **dadurch gekennzeichnet, dass** die Ausgangsanordnung (19) dazu ausgelegt ist, die Sensorsignale aus den Ladungsübertragungen, die durch die Kapazitätsänderungen in den optisch variablen Bereichen der Anzeigebildelemente in Reaktion auf externe Reize erzeugt werden, zu erzeugen.

2. Vorrichtung nach Anspruch 1, **dadurch gekennzeichnet, dass** sie ein Anzeigesubstrat (1) enthält, auf dem der Datensignalgenerator (4), der Abtastsignalgenerator (5), die Ausgangsanordnung (19) und die elektronischen Komponenten der Matrix integriert sind.

3. Vorrichtung nach Anspruch 2, **dadurch gekennzeichnet, dass** der Datensignalgenerator (4) längs einer ersten Kante der Matrix angeordnet ist und die Ausgangsanordnung (19) längs einer zweiten Kante der Matrix, die der ersten Kante gegenüberliegt, angeordnet ist.

4. Vorrichtung nach einem der vorhergehenden Ansprüche, **dadurch gekennzeichnet, dass** jedes Bildelemente (10) das Bilderzeugungselement (14) und einen elektronischen Schalter (11) enthält.

5. Vorrichtung nach Anspruch 4, **dadurch gekennzeichnet, dass** jedes Bilderzeugungse1ement (14) ein Flüssigkristallelement (14) enthält.

6. Vorrichtung nach Anspruch 4 oder 5, **dadurch gekennzeichnet, dass** jedes Bildelemente (10) einen Speicherkondensator (15) enthält.

7. Vorrichtung nach einem der Ansprüche 4 bis 6, **dadurch gekennzeichnet, dass** jeder elektronische Schalter (11) einen Dünnschichttransistor enthält.

8. Vorrichtung nach Anspruch 7, **dadurch gekennzeichnet, dass** jeder Transistor ein Gate, das mit dem Bildelement-Abtasteingang (13) verbunden ist, eine Source, die mit dem Bildelement-Dateneingang (12) verbunden ist, und einen Drain, der mit dem Bilderzeugungselement (14) verbunden ist, besitzt.

9. Vorrichtung nach einem der vorhergehenden Ansprüche, **dadurch gekennzeichnet, dass** sie eine Steuereinrichtung (2) zum Steuern des Datensignalgenerators und/oder des Abtastsignalgenerators und/ oder der Ausgangsanordnung (19) enthält.

10. Vorrichtung nach Anspruch 9, wenn abhängig von Anspruch 2 oder 3, **dadurch gekennzeichnet, dass** die Steuereinrichtung (2) auf dem Anzeigesubstrat (1) integriert ist.

11. Vorrichtung nach Anspruch 10, **dadurch gekennzeichnet, dass** sie als Dünnschichttransistoren verkörperte aktive Vorrichtungen enthält.

12. Vorrichtung nach einem der Ansprüche 9 bis 11, **dadurch kennzeichnet, dass** die Steuereinrichtung (2) beschaffen ist, um zu steuern, welche der Bildelement-Sensorsignale durch die Ausgangsanordnung (19) ausgegeben werden.

13. Vorrichtung nach Anspruch 12, **dadurch gekennzeichnet, dass** die Steuereinrichtung (2) programmierbar ist, um zu bestimmen, welche der Bildelement-Sensorsignale durch die Ausgangsanordnung (19) ausgegeben werden.

14. Vorrichtung nach Anspruch 13, **dadurch gekennzeichnet, dass** die Steuereinrichtung (2) während des Betriebs der Vorrichtung umprogrammierbar ist, um zu ändern, welche der Bildelement-Sensorsignale durch die Ausgangsatzordnung (19) ausgegeben werden.

15. Vorrichtung nach einem der Ansprüche 9 bis 14, **dadurch gekennzeichnet, dass** die Steuereinrichtung (2) beschaffen ist, um den Betrieb der Daten- und Abtastsignalgeneratoren und der Ausgangsanordnung (19) zu steuern, um abwechselnde Bildschreibphasen und Sensorlesephasen zu definieren.

16. Vorrichtung nach Anspruch 15, **dadurch gekennzeichnet, dass** ein Rahmen der Bilddaten während jeder Schreibphase in die Matrix geschrieben wird.

17. Vorrichtung nach Anspruch 15 oder 16, **dadurch gekennzeichnet, dass** jede Lesephase während einer vertikalen Austastperiode zwischen zwei aufeineanderfolgenden Schreibphasen auftritt.

18. Vorrichtung nach Anspruch 15, **dadurch gekennzeichnet, dass** wenigstens eine Zeile der Bilddaten während jeder Schreibphase in die Matrix geschrieben wird.

19. Vorrichtung nach Anspruch 18, **dadurch gekennzeichnet, dass** jede Lesephase das Ausgeben der Sensorsignale von wenigstens einer Zeile der Bildelemente nach der wenigstens einen Zeile, in die die Bilddaten während der vorhergehenden Schreibweise geschrieben worden sind, enthält.

20. Vorrichtung nach einem der Ansprüche 15 bis 19, **dadurch kennzeichnet, dass** die Sensorsignale von allen Bildelementen (10) während jeder Lesephase ausgegeben werden.

21. Vorrichtung nach einem der Ansprüche 15 bis 19, **dadurch gekennzeichnet, dass** die Sensorsignale einer geeigneten Teilmenge aller Bildelemente während jeder Lesephase ausgegeben werden, wobei der Begriff "geeignete Teilmenge" eine Teilmenge meint, aber die vollständige Menge und die leere Menge ausschließt.

22. Vorrichtung nach Anspruch 21, **dadurch gekennzeichnet, dass** die Sensorsignale der gleichen geeigneten Teilmenge der Bildelemente während der Lesephasen ausgegeben werden.

23. Vorrichtung nach Anspruch 21, **dadurch gekennzeichnet, dass** die geeignete Teilmenge der Bildelemente während jeder Lesephase eine Gruppe von Lesephasen verschiedene Bildelemente enthält, so dass die Sensorsignale aller Bildelemente während jeder Gruppe der Lesephasen ausgegeben werden.

24. Vorrichtung nach einem der Ansprüche 21 bis 23, **dadurch gekennzeichnet, dass** die geeignete Teilmenge der Bildelemente wenigstens eine Gruppe der Zeilen der Bildelemente enthält, wobei die oder jede Gruppe wenigstens eine Zeile enthält.

25. Vorrichtung nach Anspruch 24, **dadurch gekennzeichnet, dass** die wenigstens eine Gruppe mehrere Gruppen enthält, die im Wesentlichen gleichmäßig in der Spaltenrichtung der Matrix beabstandet sind.

26. Vorrichtung nach Anspruch 24 oder 25, **dadurch gekennzeichnet, dass** die wenigstens eine Gruppe mehrere benachbarte Zeilen enthält.

27. Vorrichtung nach einem der Ansprüche 12 bis 14, **dadurch gekennzeichnet, dass** die Steuereinheit (2) beschaffen ist, um den Betrieb der Daten- und Abtastsignalgeneratoren und der Ausgangsanordnung (19) zu steuern, um gleichzeitig die Bildsignale in die Matrix zu schreiben und die Sensorsignale aus der Matrix zu lesen.

28. Vorrichtung nach Anspruch 27, **dadurch gekennzeichnet, dass** der Datensignalgenerator (4) beschaffen ist, um die Bilddaten an erste der Datenleitungen zu liefern, und die Ausgangsanordnung (19) beschaffen ist, um die Sensorsignale aus zweiten der Datenleitungen, die von den ersten der Datenleitungen verschieden sind, für jede Zeile der Bildelemente gleichzeitig zu lesen.

29. Vorrichtung nach Anspruch 28, **dadurch kennzeichnet, dass** die ersten und zweiten Datenleitungen die gleichen für alle Zeilen der Bildelemente sind.

30. Vorrichtung nach einem der vorhergehenden Ansprüche, **dadurch gekennzeichnet, dass** die Ausgangsanordnung (19) mehrere Ladungsübertragungsverstärker (20, 20a) enthält, die mit den Spaltendatenleitungen verbunden sind.

31. Vorrichtung nach Anspruch 30, **dadurch gekennzeichnet, dass** die Anzahl der Ladungsübertragungsverstärker (20, 20a) kleiner als die Anzahl der Datenleitungen ist und dass jeder Ladungsübertragungsverstärker über einen entsprechenden ersten Multiplexer (31) mit irgendeiner aus einer jeweiligen Menge der Datenleitungen verbindbar ist.

32. Vorrichtung nach Anspruch 30 oder 31, **dadurch gekennzeichnet, dass** die Ausgangsanordnung (19) mehrere Analog/Digital-Umsetzer (21, 21a) enthält, die mit den Ausgängen der Ladungsübertragungsverstärker (20, 20a) verbunden sind.

33. Vorrichtung nach Anspruch 32, **dadurch gekennzeichnet, dass** die Anzahl der Umsetzer (21, 21a), kleiner als die Anzahl der Ladungsübertragungsverstärker (20, 20a) ist und dass jeder Umsetzer über einen entsprechenden zweiten Multiplexer (30) mit irgendeinem aus einer jeweiligen Menge der Ladungsübertragungsverstärker-Ausgänge verbindbar ist.

34. Vorrichtung nach Anspruch 32 oder 33, **dadurch gekennzeichnet, dass** die Ausgangsanordnung (19) ein Schieberegister (22) enthält, um die parallelen Ausgaben aus den Umsetzern in eine serielle Ausgabe umzusetzen.

## Revendications

1. Dispositif d'affichage et de détection à matrice active, comprenant : une matrice (6) d'éléments d'image d'affichage (10) disposés en rangées et en colonnes, chaque élément d'image ayant une entrée de données d'affichage (12) pour recevoir des données d'image à afficher, une entrée de balayage (13) pour permettre l'entrée de données d'image à partir de l'entrée de données, et un élément générateur d'image (14) comprenant une zone optiquement variable pour afficher les données d'image, les entrées de données des éléments d'image de chaque colonne étant reliées à une ligne de données de colonne respective, et les entrées de balayage des éléments d'image de chaque ligne étant reliées à une ligne de balayage de rangée respective ; un générateur de signaux de données (4) pour fournir des signaux de données aux lignes de données de colonne ; un générateur de signaux de balayage (5) pour fournir des signaux de balayage aux lignes de balayage de rangées ; et un dispositif de sortie (19) relié aux lignes de données de colonne pour sortir des signaux de capteur,
**caractérisé en ce que** le dispositif de sortie (19) est conçu pour générer les signaux de capteur à partir de transferts de charge produits par des changements de capacité à l'intérieur des zones optiquement variables des éléments d'image d'affichage en réponse à des stimuli externes.

2. Dispositif tel que revendiqué dans la revendication 1, **caractérisé en ce qu'**il comprend un substrat d'affichage (1) sur lequel sont intégrés le générateur de signaux de données (4), le générateur de signaux de balayage (5), le dispositif de sortie (19) et des composants électroniques de la matrice.

3. Dispositif tel que revendiqué dans la revendication 2, également **caractérisé en ce que** le générateur de signaux de données (4) est disposé le long d'un premier bord de la matrice, et le dispositif de sortie (19) est disposé le long d'un second bord, opposé au premier, de la matrice.

4. Dispositif tel que revendiqué dans l'une quelconque des revendications précédentes, **caractérisé en ce que** chaque élément d'image (10) comprend l'élément générateur d'image (14) et un commutateur électronique (11).

5. Dispositif tel que revendiqué dans la revendication 4, **caractérisé en ce que** chaque élément générateur d'image (14) comprend un élément à cristaux liquides (14).

6. Dispositif tel que revendiqué dans la revendication 4 ou 5, **caractérisé en ce que** chaque élément d'image (10) comprend une mémoire à condensateur (15).

7. Dispositif tel que revendiqué dans l'une quelconque des revendications 4 à 6, **caractérisé en ce que** chaque commutateur électrique (11) comprend un transistor à couches minces.

8. Dispositif tel que revendiqué dans la revendication 7, **caractérisé en ce que** chaque transistor a une porte reliée à l'entrée de balayage d'élément d'image (13), une source reliée à l'entrée de données d'élément d'image (12), et un drain relié à l'élément générateur d'image (14).

9. Dispositif tel que revendiqué dans l'une quelconque des revendications précédentes, **caractérisé en ce qu'**il comprend un élément de commande (2) pour commander l'un au moins des générateurs de signaux de données et de balayage et le dispositif de sortie (19).

10. Dispositif tel que revendiqué dans la revendication 9 lorsqu'elle est dépendante de la revendication 2 ou 3, **caractérisé en ce que** l'élément de commande (2) est intégré sur le substrat d'affichage (1).

11. Dispositif tel que revendiqué dans la revendication 10, **caractérisé en ce qu'**il comprend des dispositifs actifs conçus comme des transistors à couches minces.

12. Dispositif tel que revendiqué dans l'une quelconque des revendications 9 à 11, **caractérisé en ce que** l'élément de commande (2) est conçu pour décider quels signaux de capteur d'élément d'image sont sortis par le dispositif de sortie (19).

13. Dispositif tel que revendiqué dans la revendication 12, **caractérisé en ce que** l'élément de commande (2) est programmable pour déterminer quels signaux de capteur d'élément d'image sont sortis par le dispositif de sortie (19).

14. Dispositif tel que revendiqué dans la revendication 13, **caractérisé en ce que** l'élément de commande (2) est reprogrammable pendant le fonctionnement du dispositif pour changer de signaux de capteur d'élément d'image sortis par le dispositif de sortie (19).

15. Dispositif tel que revendiqué dans l'une quelconque des revendications 9 à 14, **caractérisé en ce que** l'élément de commande (2) est conçu pour commander le fonctionnement des générateurs de signaux de données et de balayage et du dispositif de sortie (19) afin de définir une alternance de phases d'écriture d'image et de phases de lecture de capteur.

16. Dispositif tel que revendiqué dans la revendication 15, **caractérisé en ce qu'**une trame de données d'image est inscrite sur la matrice pendant chaque phase d'écriture.

17. Dispositif tel que revendiqué dans la revendication 15 ou 16, **caractérisé en ce que** chaque phase de lecture a lieu pendant une période de suppression de trame entre des phases d'écriture consécutives.

18. Dispositif tel que revendiqué dans la revendication 15, **caractérisé en ce qu'**au moins une rangée de données d'image est inscrite sur la matrice pendant chaque phase d'écriture.

19. Dispositif tel que revendiqué dans la revendication 18, **caractérisé en ce que** chaque phase de lecture comprend la sortie des signaux de capteur à partir d'au moins une rangée d'éléments d'image après la ou les rangées sur lesquelles des données d'image ont été inscrites pendant la phase d'écriture précédente.

20. Dispositif tel que revendiqué dans l'une quelconque des revendications 15 à 19, **caractérisé en ce que** des signaux de capteur de tous les éléments d'image (10) sont sortis pendant chaque phase de lecture.

21. Dispositif tel que revendiqué dans l'une quelconque des revendications 15 à 19, **caractérisé en ce que** les signaux de capteur d'un sous-ensemble réel de tous les éléments d'image sont sortis pendant chaque phase de lecture de phase, étant précisé que le terme "sous-ensemble normal" désigne un sous-ensemble mais exclut l'ensemble plein et l'ensemble vide.

22. Dispositif tel que revendiqué dans la revendication 21, **caractérisé en ce que** les signaux de capteur du même sous-ensemble normal d'éléments d'image sont sortis pendant les phases de lecture.

23. Dispositif tel que revendiqué dans la revendication 21, **caractérisé en ce que** le sous-ensemble normal d'éléments d'image comprend différents éléments d'image pendant chaque phase de lecture d'un groupe de phases de lecture de telle sorte que les signaux de capteur de tous les éléments d'image sont sortis pendant chaque groupe de phases de lecture.

24. Dispositif tel que revendiqué dans l'une quelconque des revendications 21 à 23, **caractérisé en ce que** le sous-ensemble normal d'éléments d'image comprend au moins un groupe de rangées d'éléments d'image, le groupe ou chaque groupe contenant au moins une rangée.

25. Dispositif tel que revendiqué dans la revendication 24, **caractérisé en ce que** le ou les groupes comprennent plusieurs groupes qui sont placés globalement à intervalles réguliers dans le sens des colonnes de la matrice.

26. Dispositif tel que revendiqué dans la revendication 24 ou 25, **caractérisé en ce que** le ou les groupes comprennent plusieurs rangées voisines.

27. Dispositif tel que revendiqué dans l'une quelconque des revendications 12 à 14, **caractérisé en ce que** l'élément de commande (2) est conçu pour commander le fonctionnement des générateurs de signaux de données et de balayage et du dispositif de sortie (19) afin d'inscrire des données d'image dans la matrice et de lire des signaux de capteur sur celle-ci simultanément.

28. Dispositif tel que revendiqué dans la revendication 27, **caractérisé en ce que** le générateur de signaux de données (4) est conçu pour fournir des données d'image à des premières lignes de données, et le dispositif de sortie (19) est conçu pour lire des signaux de capteur simultanément sur des secondes lignes de données différentes des premières pour chaque rangée d'éléments d'image.

29. Dispositif tel que revendiqué dans la revendication 28, **caractérisé en ce que** les premières et les secondes sont les mêmes pour toutes les rangées d'éléments d'image.

30. Dispositif tel que revendiqué dans l'une quelconque des revendications précédentes, **caractérisé en ce que** le dispositif de sortie (19) comprend plusieurs amplificateurs de transfert de charge (20, 20a) reliés aux lignes de données de colonnes.

31. Dispositif tel que revendiqué dans la revendication 30, **caractérisé en ce que** le nombre d'amplificateurs de charge (20, 20a) est inférieur au nombre de lignes de données, et chaque amplificateur de transfert de charge est apte à être relié à l'une quelconque, parmi un ensemble respectif, des lignes de données par un premier multiplexeur respectif (31).

32. Dispositif tel que revendiqué dans la revendication 30 ou 31, **caractérisé en ce que** le dispositif de sortie (19) comprend plusieurs convertisseurs analogiques/numériques (21, 21a) reliés à des sorties des amplificateurs de transfert de charge (20, 20a).

33. Dispositif tel que revendiqué dans la revendication 32, **caractérisé en ce que** le nombre de convertisseurs (21, 21a) est inférieur au nombre d'amplificateurs de transfert de charge (20, 20a), et chaque convertisseur est apte à être relié à l'une quelconque, parmi un ensemble respectif, de sorties d'amplificateur de transfert de charge par un second multiplexeur respectif (30).

34. Dispositif tel que revendiqué dans la revendication 32 ou 33, **caractérisé en ce que** le dispositif de sortie (19) comprend un registre à décalage (22) pour convertir des sorties parallèles des convertisseurs en sortie sérielle.
